# EUROPÄISCHE PATENTSCHRIFT

(11) **EP 3 599 119 B1**
(45) Veröffentlichungstag und Bekanntmachung des Hinweises auf die Patenterteilung: **21.07.2021**
(21) Anmeldenummer: 18186150.1
(22) Anmeldetag: 27.07.2018
(51) Int. Cl.: B60J 5/06

(54) **FEUCHTIGKEITSDICHTER PLANENAUFBAU**
MOISTURE-PROOF CANVAS COVER
STRUCTURE DE BÂCHE RÉSISTANTE À L'HUMIDITÉ

(43) Veröffentlichungstag der Anmeldung: 29.01.2020
(73) Patentinhaber: Schmitz Cargobull AG, 48341 Altenberge (DE)
(72) Erfinder: Klement, Roland, 82407 Haunshofen (DE); Gözze-Leifheit, Ansgar, 48155 Münster (DE); Herbrich, Christian, 48324 Sendenhorst (DE); Jung, Bernd, 48612 Horstmar (DE); Bartke, Dieter, 48356 Nordwalde (DE)
(74) Vertreter: Cohausz & Florack

(56) Entgegenhaltungen:
- DE-U1-202008 017 440
- FR-A1- 2 678 868
- GB-A- 2 293 144
- GB-A- 2 420 744
- JP-U- S57 147 170

## Beschreibung

Die Erfindung betrifft einen Planenaufbau eines Nutzfahrzeugs, insbesondere Lastkraftwagens, Anhängers oder Sattelaufliegers, mit wenigstens einer Seitenwandplane und einer Rückwand.

Nutzfahrzeuge der genannten Art, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

Sogenannte Kofferaufbauten weisen eine feste Stirnwand, feste Seitenwände und ein festes Dach auf, welche den Laderaum begrenzen und aus mehrlagigen Paneelen gebildet werden können. Kofferaufbauten sind aufgrund der festen Wände und des festen Dachs in besonderem Maße für den Transport von feuchtigkeitsempfindlichen und/oder temperaturempfindlichen Gütern, also beispielsweise für den sogenannten Trockentransport und/oder den Kühltransport, geeignet.

Neben Kofferaufbauten sind zudem sogenannte Planenaufbauten bekannt, bei denen die Seitenwände und bedarfsweise auch das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeeinheit entlang der Seitenwand verschoben werden kann, spricht man auch von sogenannten Curtainsidern. Beispiele solcher Aufbauten sind in GB 2 293 144 A und JP S57 147170 U offenbart.

Das Dach von Planenaufbauten weist typischerweise seitlich angeordnete Längsholme auf, die unter Bildung einer Rahmenstruktur quer zum Nutzfahrzeug über Spriegel miteinander verbunden sind. Die Rahmenstruktur trägt dann die das Dach verschließende Dachplane, wobei die Rahmenstruktur durch Rungen getragen wird, die sich wenigstens an den vorderen beiden Ecken und den hinteren beiden Ecken des Nutzfahrzeugs befinden. Die vorderen Eckrungen können dabei einen Teil der Stirnwand und die hinteren Eckrungen einen Teil der Rückwand bzw. des Rückwandportals bilden, das die rückwärtigen Flügeltüren trägt und das durch die Flügeltüren verschlossen werden kann.

Eine Seitenwandplane kann zum Zwecke des Aufschiebens und Verschließens der entsprechenden Seitenwand mit Schlitten am zugehörigen Längsholm gehalten sein, wobei die Schlitten Planenlaufrollen aufweisen können, die über Planenlaufflächen des Längsholms in Längsrichtung des Längsholms abrollen können. Zum Verschließen der Seitenwand durch die Seitenwandplane wird die Seitenwandplane formschlüssig mit einer vorderen Eckrunge und einer hinteren Eckrunge verbunden. Hierzu können entweder Hakenprofile oder Planenspannrohre genutzt werden. Während die Seitenwandplane in einem Hakenprofil lediglich formschlüssig aufgenommen und an der entsprechenden Eckrunge gehalten werden kann, erlaubt die Verwendung eines Planenspannrohrs zusätzlich das Aufwickeln überschüssigen Planenmaterials und damit das Strammziehen der Seitenwandplane entlang der zu verschließenden Öffnung des Planenaufbaus. Das Planenspannrohr kann zu diesem Zweck mit der Seitenwandplane in eine Aufnahme in der Eckrunge eingehängt und dort um die Längsachse des Planenspannrohrs gedreht werden. Die Seitenwandplane wird dabei teilweise um das Planenspannrohr gewickelt und die Seitenwandplane so stramm gezogen.

Um das Be- und/oder Entladen von Planenaufbauten zu vereinfachen, können insbesondere die Eckrungen höhenverstellbar ausgebildet sein. Dadurch kann das Dach insgesamt, an bestimmen Ecken und/oder einer bestimmten Seite des Nutzfahrzeugs angehoben werden, je nachdem wo das Be- und/oder Entladen erfolgen soll. Das wenigstens bereichsweise Anheben des Dachs erlaubt das Be- und Entladen von Ladung mit einer Höhe, die etwa der maximalen Ladehöhe des Laderaums entspricht, ohne dass das Beladen durch den seitlichen Längsholm des Dachs behindert wird. Zusätzlich oder alternativ können Dächer von Planenaufbauten auch in unterschiedlichen Höhen in verschiedenen Fahrstellungen angeordnet werden. Auf diese Weise kann das Dach jeweils an die maximal zulässige Gesamthöhe des Nutzfahrzeugs und/oder an die Höhe der geladenen Ladung angepasst werden, um so möglichst viel Ladung transportieren und/oder den Luftwiderstand des Nutzfahrzeugs minimieren zu können. Zusätzlich besteht das Bestreben, das hintere Ende des Dachs während der Fahrt niedriger anzuordnen als das vordere Ende des Dachs, um einen aerodynamischeren Planenaufbau bereitzustellen, welcher der Einsparung von Treibstoff dient.

Um die Eckrungen höhenverstellbar auszubilden, ist es bekannt, die Eckrungen mit einem Rungenschiebling zu versehen, der mit dem Dach, insbesondere mit dem Längsholm, verbunden ist. Der Rungenschiebling ist dabei teilweise in einem Rungengrundkörper aufgenommen und wenigstens teilweise aus dem Rungengrundkörper nach oben ausziehbar vorgesehen. Zudem kann der Rungenschiebling in unterschiedlichen Höhen relativ zum Rungengrundkörper am Rungengrundkörper festlegbar sein. Der Rungengrundkörper ist dabei fest mit dem Boden des Planenaufbaus verbunden.

Unabhängig von einer möglichen Höhenverstellbarkeit des Dachs kann das Dach ein Schiebeverdeck aufweisen, das es erlaubt, die das Dach verschließende Dachplane nach vorne zu verschieben, um das Dach wenigstens teilweise für das Be- und/oder Entladen von oben zu öffnen. Dazu ist das Schiebeverdeck über Schlitten an die Längsholme des Planenaufbaus angebunden. Die Schlitten weisen dabei insbesondere Planenlaufrollen auf, die über Planenlaufflächen der Längsholme in Längsrichtung der Längsholme abrollen können. Zum Schließen des Dachs wird der am hinteren Ende des Schiebeverdecks vorgesehene Verdecklaufwagen mit der Rückwand bzw. dem Rückwandportal verriegelt, um ein versehentliches Öffnen des Schiebeverdecks zu verhindern.

Bei Planenaufbauten der eingangs genannten und zuvor näher erläuterten Art besteht ganz im Gegensatz zu den Kofferaufbauten das Problem der Abdichtung des Planenaufbaus gegenüber Feuchtigkeit, insbesondere während Regenfahrten. Um die Planenaufbauten möglichst dicht zu bekommen, muss ein nicht unerheblicher Aufwand betrieben werden, und zwar einerseits für die Integration bestimmter Dichtungen oder Dichtungssysteme und andererseits für die Verbindung der Seitenwandplane mit den Eckrungen. Wenn der Aufwand zum Abdichten des Planenaufbaus etwa aufgrund der damit zusammenhängenden Kosten gescheut wird, muss eine geringere Dichtigkeit des Planenaufbaus in Kauf genommen werden.

Daher liegt der vorliegenden Erfindung die Aufgabe zugrunde, Planenaufbauten der eingangs genannten und zuvor näher beschriebenen Art derart auszugestalten und weiterzubilden, dass das Be- und Entladen des Nutzfahrzeugs vereinfacht werden kann.

Diese Aufgabe ist bei einer Planeneinheit nach dem Oberbegriff des Anspruchs 1 dadurch gelöst, dass die Rückwand wenigstens eine zur Seite öffnende Flügeltür aufweist und dass das wenigstens eine Verbindungsmittel an der in der geschlossenen Stellung der Flügeltür rückwärtigen Seite der Flügeltür vorgesehen ist.

Die Erfindung hat erkannt, dass die Dichtigkeit des Planenaufbaus in einfacher aber effektiver Weise dadurch gesteigert werden kann, dass das hintere Ende der Seitenwandplane nicht an der Seitenwand des Planenaufbaus an der entsprechenden hinteren Eckrunge, sondern an der Rückwand, und zwar dort an der rückwärtigen Seite, festgelegt wird. Hierzu ist an der rückwärtigen Seite der Rückwand wenigstens ein entsprechendes Verbindungsmittel vorgesehen. Mithin wird die Seitenwandplane wenigstens abschnittsweise um die hintere Ecke des Planenaufbaus herumgeschlagen, wodurch diese hintere Ecke des Planenaufbaus insoweit durch die umgeschlagene Seitenwandplane gegenüber einem Eindringen von Feuchtigkeit geschützt wird. Die entsprechende Abdichtung des Planenaufbaus ist konstruktiv und von der Handhabung der Seitenwandplane her sehr einfach zu bewerkstelligen.

Besonders zweckmäßig ist es in diesem Zusammenhang, wenn die Seitenwandplane über wenigstens im Wesentlichen die gesamte Höhe der zugehörigen hinteren Eckrunge um diese hintere Eckrunge herumgeschlagen und an der rückwärtigen Seite der Rückwand an wenigstens einem entsprechenden Verbindungsmittel festgelegt ist. Dann wird die Eckrunge über wenigstens im Wesentlichen die gesamte Höhe durch das hintere Ende der Seitenwandplane abgedichtet. Es kann aber auch ausreichen und dann wünschenswert sein, das hintere Ende der Seitenwandplane nur über ein Teil der Höhe der zugehörigen hinteren Eckrunge umzuschlagen.

In diesem Sinne wird unter dem hinteren Ende der Seitenwandplane vorzugsweise auch nicht ausschließlich die hintere Kante der Seitenwandplane, sondern vorzugsweise der Bereich des hinteren Rands der Seitenwandplane verstanden, auch wenn es bevorzugt sein wird, wenigstens im Wesentlichen die hintere Kante der Seitenwandplane an dem wenigstens einen Verbindungsmittel an der rückwärtigen Seite der Rückwand festzulegen. Beides ist vorliegend aber nicht zwingend der Fall.

Bei einer ersten besonders bevorzugten Ausgestaltung des Planenaufbaus ist das wenigstens eine Verbindungsmittel der Rückwand zum formschlüssigen Festlegen der Seitenwandplane vorgesehen und ausgebildet. Dadurch kann die Seitenwandplane sehr zuverlässig und dauerhaft an der Rückwand festgelegt werden. Außerdem ist das Verbinden der Seitenwandplane mit dem Verbindungsmittel der Rückwand bedarfsweise sehr einfach und ohne besonderes Werkzeug möglich. Zum dichten Verschließen des Planenaufbaus ist das hintere Ende der Seitenwandplane dann bevorzugt wenigstens auch formschlüssig an der rückwärtigen Seite der Rückwand an dem wenigstens einen Verbindungsmittel festgelegt.

Die Verbindung der Rückwand mit der Seitenwandplane kann besonders einfach, schnell und zuverlässig bewerkstelligt werden, wenn das wenigstens eine Verbindungsmittel der Rückwand ein Verbindungsprofil, vorzugsweise ein, insbesondere C-förmiges, Hakenprofil, ist. So muss die Seitenwandplane bedarfsweise in das wenigstens eine Verbindungsmittel lediglich eingehängt oder eingezogen werden. Alternativ oder zusätzlich bietet es sich an, wenn das hintere Ende der Seitenwandplanen zur Verbindung mit dem wenigstens einen Verbindungsmittel der Rückwand eine Spannstange oder einen Keder aufweist. Eine Spannstange und ein Keder sind besonders geeignet, um schnell, einfach und zuverlässig mit dem Verbindungselement verbunden zu werden. Zudem sind Fahrern solche Verbindungsmittel der Seitenwandplane bekannt, weshalb sie ohne weitere Schulung intuitiv richtig gehandhabt werden.

Besonders zweckmäßig für ein einfaches Schließen der Seitenwandplane um die hintere Eckrunge herum ist es, wenn die wenigstens eine Seitenwandplane über Schlitten derart an einem Längsholm des Dachs gehalten ist, so dass die Seitenwandplane entlang des Längsholms von einer die zugehörige Seitenwand verschließenden, geschlossenen Stellung in eine die Seitenwand zum Be- und/oder Entladen freigebende, geöffnete Stellung verstellbar ist. Bei solchen Planenaufbauten, die auch als Curtainsider-Aufbauten bezeichnet werden, kommt zudem der erfindungsgemäße Vorteil betreffend das Abdichten des Planenaufbaus gegenüber Feuchtigkeit in besonderem Maße zum Tragen, da die Dichtheit von Curtainsider-Aufbauten bislang - wenn überhaupt - nur mit einem sehr hohen Aufwand bereitgestellt werden kann.

Bei der Verwendung von längs des Planenaufbaus verschieblichen Schiebeplanen als Seitenwandplanen ist es zudem bevorzugt, wenn an einer Stirnwand und/oder einer vorderen Eckrunge eine Spanneinrichtung, insbesondere eine Ratscheneinrichtung, zum Spannen der Seitenwandplane in der geschlossenen Stellung, vorgesehen ist. So kann die Seitenwandplane über ihr vorderes Ende nicht nur am Planenaufbau festgelegt, sondern auch strammgezogen werden. Dabei ist das Spannen der Seitenwandplane in einfacher und zugleich zuverlässiger Weise möglich, indem die Seitenwandplane teilweise durch ein Aufwickeln der Seitenwandplane um ein Planenspannrohr gespannt wird. Das Planenspannrohr kann dabei Teil der Seitenwandplane sein, das beim Schließen der Seitenwandplane in eine Ratscheneinrichtung eingehängt werden kann.

Nicht nur für das Be- und Entladen ist es zweckmäßig, dass die Rückwand wenigstens eine zur Seite öffnende, insbesondere über wenigstens ein Scharnier an einer hinteren Eckrunge angeschlagene, Flügeltür aufweist. Die wenigstens eine Flügeltür bietet sich zudem an, um die Seitenwandplane an der rückwärtigen Seite an der Rückwand festzulegen. Der Einfachheit halber ist das wenigstens eine Verbindungsmittel an der in der geschlossenen Stellung der Flügeltür rückwärtigen Seite der Flügeltür vorgesehen.

Dabei ist es für ein einfaches Handling des Planenaufbaus insgesamt von Vorteil, wenn trotz der mit ihrem hinteren Ende an der rückwärtigen Seite der wenigstens einen Flügeltür an der Flügeltür festgelegten Seitenwandplane die wenigstens eine Flügeltür im mit der Seitenwandplane über das wenigstens eine Verbindungsmittel verbundenen Zustand von der die Rückwand wenigstens teilweise verschließenden, geschlossenen Stellung in die die Rückwand zum Be- und/oder Entladen wenigstens teilweise freigebende, geöffnete Stellung und zurück verstellbar ist. Mit anderen Worten ist die Seitenwand im geschlossenen Zustand der Seitenwandplane und der Flügeltür so um die zugehörige hintere Eckrunge herumgeführt, dass die entsprechende Flügeltür geöffnet und wieder geschlossen werden kann, ohne dass dazu die Verbindung zwischen der Flügeltür und der Seitenwand getrennt werden müsste. Dies lässt sich beispielsweise recht einfach durch eine geeignete Anordnung der Scharniere der Flügeltür bewerkstelligen. Beispielsweise können die Scharniere gegenüber der Seitenwand weit genug nach innen eingerückt werden.

Die Handhabung des Planenaufbaus wird weiter dadurch vereinfacht, dass die Seitenwandplane in der geschlossenen Stellung der Seitenwandplane derart über das wenigstens eine Verbindungsmittel der wenigstens einen Flügeltür an der Flügeltür festgelegt ist, so dass die Seitenwandplane durch das Schließen der Flügeltür gespannt und/oder durch das Öffnen der Flügeltür entspannt werden kann. Mit andern Worten reicht es zum Spannen der Seitenwandplane aus, die zugehörige Flügeltür zu schließen. Zum Öffnen der Flügeltür muss die Seitenwandplane zudem vorzugsweise nicht von der Flügeltür getrennt werden. Bedarfsweise kann es erforderlich sein, die Seitenwandplane einmal über eine entsprechende Einrichtung, insbesondere an der vorderen Eckrunge, zu spannen, etwa wenn die Seitenwandplane mit der Flügeltür bereits verbunden ist. So wird eine Vorspannung erreicht, die das Spannen der Seitenwandplane auf einfache und zugleich zuverlässige Weise über das Schließen der zugehörigen und mit der Seitenwandplane verbundenen Flügeltür ermöglicht.

Die zuvor beschriebenen und die Dichtigkeit des Planenaufbaus betreffenden Vorteile kommen im Übrigen auch in besonderem Maße zum Tragen, wenn ein wenigstes am hinteren Ende höhenverstellbares Dach vorgesehen ist. Bei entsprechenden Planenaufbauten ergeben sich aufgrund der entsprechenden mechanischen Höhenverstellungseinrichtungen oftmals nicht unerhebliche Dichtigkeitsprobleme. Dies gilt insbesondere, wenn das rückwärtige Ende des Dachs von hinteren, höhenverstellbaren Eckrungen getragen wird. Die Abdichtung dieser Eckrungen ist oftmals konstruktiv schwierig und daher entsprechend aufwendig. Dies gilt in gleicher Weise alternativ oder zusätzlich auch, wenn das hintere Ende des Dachs mit einer sich entlang der Rückwand nach unten erstreckenden, die Rückwand in wenigstens einer oberen Stellung des Dachs wenigstens teilweise verschließenden Rückwandschürze verbunden ist. Die Rückwandschürzen stellen dabei sicher, dass sich in der Rückwand keine Öffnung bildet, wenn das hintere Ende des Dachs angehoben wird. Dies in besonderem Maße, wenn die Rückwand durch Flügeltüren verschlossen wird, für die Bereiche zwischen den oberen Kanten der Flügeltüren und der unteren Kante des Dachs. Die Flügeltüren lassen sich nämlich nicht oder nur mit einem hohen Aufwand selbst in ihrer Höhe verstellbar machen.

Um eine Dichtigkeit auch bei höhenverstellbaren Dächern bereitstellen zu können, bietet es sich an, wenn an der rückwärtigen Seite der Rückwandschürze wenigstens ein Verbindungsmittel zum Festlegen der Seitenwandplane vorgesehen ist. Dabei kann dann das hintere Endes der wenigstens einen Seitenwandplane an dem wenigstens einen Verbindungsmittel der hinteren Eckrunge und/oder der Rückwandschürze festgelegt sein, um den Planenaufbau zu verschließen. Hierzu weist das hintere Ende der Seitenwandplane vorzugsweise wenigstens ein korrespondierendes Verbindungsmittel auf.

Konstruktiv einfach und doch funktional kann es sein, wenn das wenigstens eine Verbindungsmittel der Rückwandschürze wenigstens einen Magneten umfasst und/oder wenn die wenigstens eine Seitenwandplane wenigstens einen Magneten zur Verbindung des hinteren Endes der Seitenwandplane mit dem wenigstens einen Verbindungsmittel der Rückwandschürze umfasst. Mithin kann zwischen der Rückwandschürze einerseits und dem hinteren Ende der Seitenwandplane andererseits eine Magnetverbindung zum dichten Verschließen der Seitenwandplane vorgesehen sein.

Grundsätzlich kann das wenigstens eine Verbindungmittel der Rückwandschürze an wenigstens einem gegenüber einer Flügeltür nach oben ausziehbaren und nach unten wieder einschiebbaren Türschwert vorgesehen ist. Durch die Höhenverstellung des hinteren Endes des Dachs wird das Türschwert gegenüber der zugehörigen Flügeltür nach oben ausgezogen oder nach unten eingeschoben. Anders als die Rückwandschürze selbst, kann das Türschwert mitsamt der zugehörigen Flügeltür zum teilweisen Öffnen und/oder Schließen des Planenaufbaus zur Seite geschwenkt werden. Die Verbindung zwischen dem Türschwert und dem hinteren Ende der Seitenwandplane ist zudem bevorzugt so ausgebildet, dass die Verbindung nicht zuvor gelöst werden muss, um die wenigstens eine Flügeltür zwischen der geöffneten und der geschlossenen Stellung hin und her zu schwenken. Die Flügeltür kann also mitsamt dem Türschwert geöffnet und geschlossen werden, während das hintere Ende der Seitenwandplane mit dem Verbindungsmittel des Türschwerts und bedarfsweise zusätzlich mit dem an der Flügeltür vorgesehenen Verbindungsmittel verbunden ist. Das Türschwert kann also sicherstellen, dass die Seitenwandplane einerseits an der Rückwandschürze festgelegt und andererseits durch ein Öffnen der Flügeltür zuverlässig insgesamt geöffnet werden kann.

Es kann aber auch auf die Verwendung eines Türschwerts verzichtet werden, beispielsweise wenn sich die Verbindung zwischen der Seitenwandplane und der Rückwandschürze durch ein Öffnen der zugehörigen Flügeltür lösen lässt. Wenn hier eine Magnetverbindung vorgesehen ist, können die Magnetkräfte so gewählt werden, dass sich die Magnetverbindung während der Fahr nicht versehentlich löst und dass die Magnetverbindung gleichzeitig durch ein Öffnen der zugehörigen Flügeltür zuverlässig gelöst werden kann, um das hintere Ende der Seitenwandplane dann zuverlässig von der Rückwandschürze trennen zu können.

Im Falle eines Türschwerts ist es besonders zweckmäßig, wenn das wenigstens eine Verbindungsmittel des Türschwerts derart mit dem hinteren Ende der Seitenwandplane verbunden ist, so dass die Seitenwandplane durch das Schließen der Flügeltür gespannt und/oder durch das Öffnen der Flügeltür entspannt, werden kann. Dies lässt sich durch einen geeigneten Anschlag der Flügeltür über die Scharniere an der zugehörigen Eckrungen bzw. dem zugehörigen Rückwandportal erreichen.

Grundsätzlich bevorzugt ist es, wenn das wenigstens eine Türschwert mit der Rückwandschürze und nicht, wenigstens nicht direkt, mit einer Flügeltür verbunden ist. Insbesondere kann das Türschwert dann über Scharniere schwenkbar an der Rückwandschürze vorgesehen sein. Alternativ oder zusätzlich ist es aber auch möglich, dass das Türschwert direkt mit einer Flügeltür und nicht direkt mit der Rückwandschürze verbunden ist. Dadurch kann sichergestellt und/oder vereinfacht werden, dass das Türschwert gemeinsam mit der zugehörigen Flügeltür von der geschlossenen Stellung in die geöffnete Stellung geschwenkt werden kann.

Eine einfache Höhenverstellung des Dachs eines feuchtigkeitsdichten Planenaufbaus kann in zuverlässiger Weise dadurch erhalten werden, dass die höhenverstellbare Eckrunge einen mit dem Dach oder einem Längsholm verbundenen sowie gegenüber einem Rungengrundkörper wenigstens teilweise ausziehbaren Rungenschiebling aufweist. Dabei kann die entsprechende Eckrunge mitsamt des Rungenschieblings vorzugsweise von der Seitenwandplane in der geschlossenen Stellung auf der Außenseite wenigstens im Wesentlichen vollständig umschlossen sein. Auf diese Weise kann einfach und zuverlässig eine hinreichende Abdichtung des Planenaufbaus bereitgestellt werden.

Wenn das Dach an seinem vorderen Ende und an seinem hinteren Ende höhenverstellbar vorgesehen ist, lässt sich der Planenaufbau sehr flexibel an die jeweiligen Anforderungen anpassen. Dies gilt insbesondere und zweckmäßigerweise dann, wenn die vorderen Ecken und die hinteren Ecken des Dachs mit höhenverstellbaren Eckrungen verbunden sind.

Eine einfache Höhenverstellung und zugleich Abdichtung des Planenaufbaus kann dabei erreicht werden, wenn die höhenverstellbaren Eckrungen einen mit dem Boden des Planenaufbaus fest verbundenen Rungengrundkörper und einen mit dem Dach bzw. dem zugehörigen Längsholm fest verbundenen Rungenschiebling aufweisen. Für die Einstellung des Dachs auf unterschiedlichen Höhen, können die Rungenschieblinge gegenüber dem Rungengrundkörper wenigstens teilweise ausziehbar und wieder einschiebbar vorgesehen sein. Zudem ist es effektiv, wenn die Rungenschieblinge an den Rungengrundkörpern gehalten sind.

Um das Dach in unterschiedlichen Höhen fixieren zu können, bietet es sich an, wenn die Rungenschieblinge in unterschiedlichen Höhen gegenüber den Rungengrundkörpern festlegbar sind. Sehr flexibel ist es dabei, wenn zeitgleich einzelne Rungenschieblinge, insbesondere die Rungenschieblinge der hinteren Eckrungen, in anderen Höhen gegenüber den zugehörigen Rungengrundkörpern festlegbar sind als andere Rungenschieblinge, insbesondere die Rungenschieblinge der vorderen Eckrungen, gegenüber den zugehörigen Rungengrundkörpern. So kann das Dach beispielsweise während der Fahrt hinten tiefer angeordnet sein als vorne, was sich aerodynamisch günstig auswirken kann. Es kann aber auch das Dach beim Be- und/oder Entladen seitlich gekippt werden, so dass das Dach an der zu beladenden Seite höher ist als an der nicht zu beladenden Seite. Es kann aber auch zweckmäßig sein, das Dach sowohl um seine Längsachse als auch um seine Querachse zu neigen, wenn dies beispielsweise infolge der Beladungssituation, Vorteile bietet.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug in Form eines Sattelaufliegers mit einem erfindungsgemäßen Planenaufbau in einer perspektivischen Ansicht,
- Fig. 2: die Rückwand des Planenaufbaus mit dem Dach in einer unteren Stellung in einer Ansicht von hinten,
- Fig. 3A-B: das Verbindungsmittel der Rückwand der Fig. 2 und das korrespondierende Verbindungsmittel des hinteren Endes der Seitenwandplane zum Verbinden mit der Rückwand jeweils in einer perspektivischen Ansicht.
- Fig. 4: die Rückseite des Planenaufbaus mit dem Dach in einer oberen Stellung in einer Ansicht von hinten,
- Fig. 5: den Planenaufbau aus Fig. 4 mit einer geöffneten Flügeltür in einer perspektivischen Ansicht.

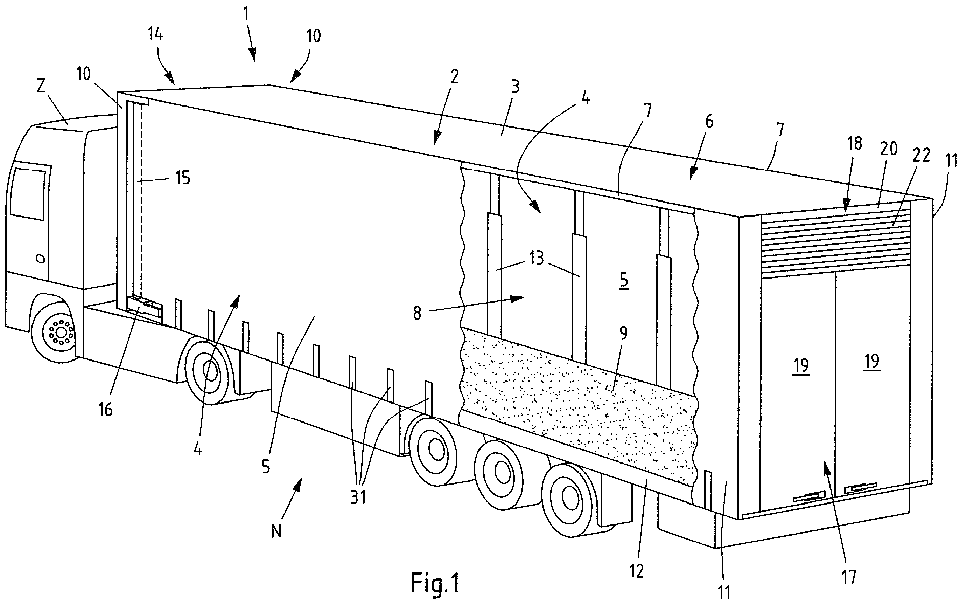

In der Fig. 1 ist ein von einer Zugmaschine Z gezogenes Nutzfahrzeug N in Form eines Sattelaufliegers dargestellt. Das Nutzfahrzeug N weist einen Planenaufbau 1 in Form eines Curtainsider-Aufbaus auf. Der Planenaufbau 1 weist eine das Dach 2 verschließende Dachplane 3 und jeweils eine eine Seitenwand 4 verschließende Seitenwandplane 5 auf. Die Dachplane 3 ist dabei Teil eines Schiebeverdecks 6, welches zum Öffnen des Dachs 2 zum Be- und/oder Entladen des Planenaufbaus 1 nach vorne geschoben werden kann. Dazu ist das Schiebeverdeck 6 mit Laufrollen aufweisenden Schlitten an Längsholmen 7 derart gehalten, dass die Laufrollen entlang von Planenlaufflächen der Längsholme 7 in Längsrichtung der Längsholme 7 abrollen können, um das Schiebeverdeck 6 nach vorne und wieder zurück nach hinten schieben zu können.

An den Längsholmen 7 sind zudem die Seitenwandplanen 5 mit Schlitten gehalten. Die Seitenwandplanen 5 können in der Längsrichtung des Planenaufbaus 1 nach vorne und/oder nach hinten verschoben werden, wobei die Schlitten der Seitenwandplanen 5 über entsprechende Laufrollen an korrespondierenden Planenlaufflächen der Längsholme 7 verschoben werden können. Durch das Verschieben der Seitenwandplanen 5 in der Längsrichtung der Längsholme 7 können die Seitenwände 4 zum Be- und/oder Entladen unter Freigabe des Laderaums 8 sowie des Ladebodens 9 des Planenaufbaus 1 geöffnet und vor der Fahrt des Nutzfahrzeugs N wieder geschlossen werden.

Der Planenaufbau 1 weist an den umlaufenden vier vertikalen Kanten Eckrungen 10,11 auf, die einerseits mit dem den Ladeboden 9 tragenden Boden 12 des Planenaufbaus 1 verbunden sind und andererseits das Dach 2 bzw. die Längsholme 7 des Dachs 2 stützen. Zwischen den Eckrungen 10,11 können an den Seitenwänden 4 weitere Rungen vorgesehen sein, die aufgrund ihrer Anordnung als Mittelrungen 13 bezeichnet werden. Die Mittelrungen 13 können zudem im Gegensatz zu den Eckrungen 10,11 entfernt oder entlang des Längsholms 7 zur Seite geschoben werden, um die Zugänglichkeit des Laderaums 8 zum Be- und/oder Entladen zu verbessern.

An den den Seitenwänden 5 zugeordneten Seiten der vorderen Eckrungen 10, die auf der Höhe der Stirnwand 14 vorgesehen sind, sind die vorderen Enden der Seitenwandplanen 5 formschlüssig festgelegt. Die dargestellten und insoweit bevorzugten Seitenwandplanen 5 weisen dazu an den vorderen Enden Planenspannrohre 15 auf, die in die vorderen Eckrungen 10 eingehängt werden können. Die dargestellten und insoweit bevorzugten vorderen Eckrungen 10 weisen Ratscheneinrichtungen 16 auf, mit denen die Planenspannrohre 15 unter einem Aufwickeln von überschüssigem Planenmaterial der Seitenwandplanen 5 auf die Planenspannrohre 15 um ihre Längsachse gedreht werden können. Das Aufwickeln überschüssigen Planenmaterials der Seitenwandplanen 5 führt zu einem Strammziehen bzw. Spannen der Seitenwandplanen 5.

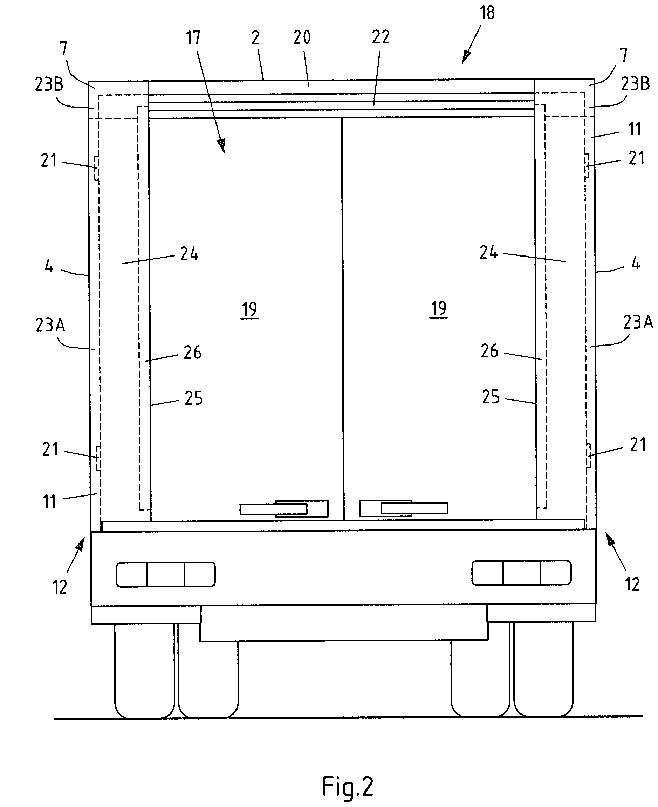

In der Fig. 2 ist die Rückwand 17 des Planenaufbaus 1 dargestellt, die ein Rückwandportal 18 und zwei an dem Rückwandportal 18 angebrachte Flügeltüren 19 umfasst. Das Rückwandportal 18 umfasst dabei zwei hintere Eckrungen 11 und einen die hinteren Eckrungen verbindenden, oberen Querholm 20. Die Flügeltüren 19 sind an ihren seitlichen Rändern über Scharniere 21 an den hinteren Eckrungen 11 angeschlagen und können demnach von der den Laderaum 8 teilweise verschließenden, geschlossenen Stellung seitlich in die den Laderaum teilweise freigebende, geöffnete Stellung geschwenkt werden. Bei dem dargestellten und insoweit bevorzugten Planenaufbau 1 sind das vordere Ende und das hintere Ende des Dachs 2 unabhängig voneinander höhenverstellbar vorgesehen. Um zu vermeiden, dass beim Anheben des Dachs zwischen dem Dach 2 und den Flügeltüren 19 der Rückwand 17 eine Öffnung entsteht, über die Feuchtigkeit in den Laderaum 8 gelangen kann, ist an der Rückwand 17 eine mit dem Dach 2 verbundene und sich nach unten erstreckende Rückwandschürze 22 vorgesehen. Die Rückwandschürze 22 verschließt dabei den Spalt zwischen dem Dach 2 und der Oberkante der Flügeltüren 19. Je höher das Dach 2 angehoben wird, desto weiter wird die Rückwandschürze 22 nach oben über die Flügeltüren 19 angehoben. Getragen wird das hintere Ende des Dachs 2 überwiegend von den hinteren Eckrungen 11.

Die hinteren Eckrungen 11 und zum Anheben des vorderen Endes des Dachs 2 auch die vorderen Eckrungen 10 sind höhenverstellbar und dazu mit einem fest mit dem Boden 12 des Planenaufbaus 1 verbundenen Rungengrundkörper 23A sowie mit einem gegenüber dem Rungengrundkörper 23A ausziehbar und wieder einschiebbaren Rungenschiebling 23B versehen, der fest mit einem Längsholm 7 verbunden ist. Zudem kann der Rungenschiebling 23B in mehreren Höhen gegenüber dem zugehörigen Rungengrundkörper 23A an dem Rungengrundkörper 23A festgelegt werden. Über diese Höhenverstellung der Eckrungen 10,11 kann das Dach 2 in dem der jeweiligen Eckrunge 10,11 zugewandten Eckbereich nach oben oder unten verstellt werden. Dabei können die Rungenschieblinge 23B in unterschiedlichen Höhen gegenüber den Rungengrundkörpern 23A festlegelegt werden, um das Dach 2 im Bereich der entsprechenden Eckrunge 10,11 je nach Bedarf zuverlässig in unterschiedlichen Höhen halten zu können. Dabei können beim dargestellten und insoweit bevorzugten Planenaufbau 1 die Eckrungen 10,11 unabhängig voneinander in unterschiedlichen Höhen fixiert werden. So können die hinteren Eckrungen 11 tiefer angeordnet werden als die vorderen Eckrungen 10, so dass das Dach 2 nach hinten abfällt. Das Dach 2 kann aber auch an einer Seite höher angehoben sein, als an der gegenüberliegenden Seite, so dass das Dach 2 seitlich geneigt ist. Denkbar ist aber auch eine Überlagerung einer seitlichen Neigung des Dachs 2 und einer Neigung des Dachs 2 in der Längsrichtung des Planenaufbaus 1. In solch einem Fall können beispielsweise alle vier Eckrungen 10,11 eine unterschiedliche Höhe aufweisen. Je nachdem, wie das Dach 2 in seiner Höhe eingestellt wird, ist das Dach 2 parallel zum Ladeboden 9 ausgerichtet oder in der Längsrichtung des Planenaufbaus 1 und/oder in der Querrichtung des Planenaufbaus 1 gegenüber dem Ladeboden 9 geneigt.

Die hinteren Enden 24 der Seitenwandplanen 5 sind nicht mit den den Seitenwänden 4 zugeordneten Seiten der Eckrungen 11 verbunden, um die Seitenwände 4 zu verschließen. Die hinteren Enden 24 der Seitenwandplanen 5 sind bei dem dargestellten und insoweit bevorzugten Planenaufbau 1 mit an den rückwärtigen Seiten der Flügeltüren 19 vorgesehenen Verbindungsmitteln 25 verbunden, um ein versehentliches Öffnen der Seitenwandplanen 5 während der Fahrt zu vermeiden. Dabei sind die hinteren Enden 24 der Seitenwandplanen 5 außen um die zugehörigen hinteren Eckrungen 11 herumgelegt. Die Seitenwandplanen 5 umgreifen entsprechend die hinteren Eckrungen 11 und sorgen auf diese Weise für eine Abdichtung des Planenaufbaus 1. Dabei sind die höhenverstellbaren hinteren Eckrungen 11 bedarfsweise unabhängig von ihrer jeweiligen Höhe und jeweils inklusive des mit dem Dach 2 und/oder dem Längsholm 7 verbundenen sowie gegenüber einem Rungengrundkörper 23A wenigstens teilweise ausgezogenen Rungenschiebling 23B von der Seitenwandplane 5 in der geschlossenen Stellung nach außen wenigstens im Wesentlichen vollständig umschlossen. Die Seitenwandplanen 5 sind also bevorzugt wenigstens im Wesentlichen über die gesamte jeweilige Höhe der Eckrungen 11 außen von der Seitenwand 5 zur Rückwand 17 herumgelegt, so dass die hinteren Eckrungen 11 auch in einer verlängerten Stellung durch die Seitenwandplanen 5 abgedichtet sind. Die Seitenwandplanen 5 reichen dabei so weit nach unten, dass die Seitenwandplanen 5 auch in der obersten Stellung des Dachs 2 dicht mit dem Boden 12 des Planenaufbaus 1 verbunden und über entsprechende Spannmittel 31 in vertikaler Richtung stramm gezogen werden können. Je nachdem in welcher Höhe das Dach 2 angeordnet ist, können die Seitenwandplanen 5 zudem um den unteren Rand mehr oder weniger weit umgeschlagen werden, so dass überschüssiges Planenmaterial das Schließen und Öffnen der Seitenwände 4 nicht sonderlich beeinträchtigt.

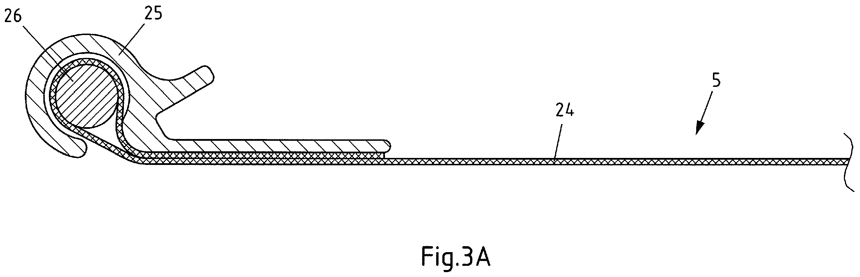

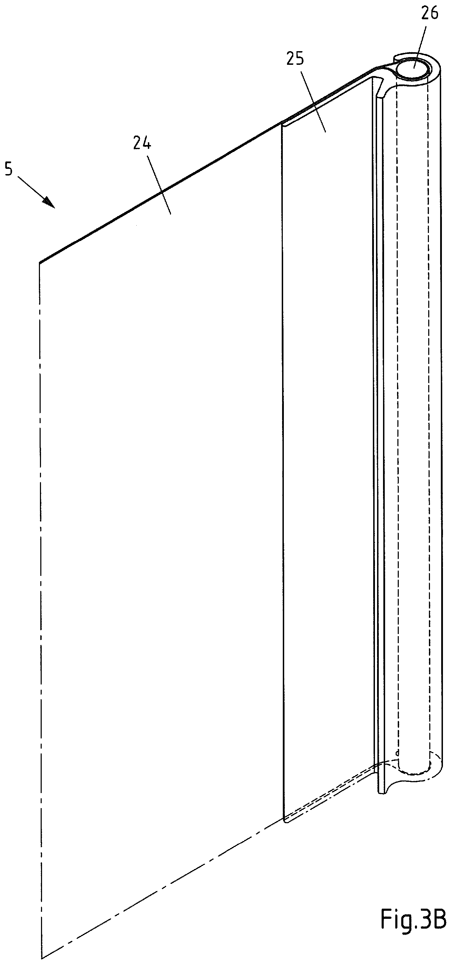

In den Fig. 3A-B ist ein rückwärtiges Verbindungsmittel 25 der Rückwand 17 in Form eines C-förmigen Hakenprofils dargestellt, in das das hintere Ende 24 der Seitenwandplane 5 formschlüssig mit einem korrespondierenden Verbindungsmittel 26 in Form eines Keders in dem Verbindungsmittel 25 der Rückwand 17 aufgenommen und gehalten wird. Das Verbindungsmittel 26 der Seitenwandplane 5 erstreckt sich dabei wenigstens im Wesentlichen über die gesamte Höhe der zugehörigen Flügeltür 19. Gleiches gilt für die dargestellten und insoweit bevorzugten Verbindungsmittel 25 an den Rückseiten der Flügeltüren 19.

Das Verbindungsmittel 25 der Rückwand 17 kann bedarfsweise zum Schließen der Seitenwandplane 5 an der Rückwand 17 bzw. einer Flügeltür 19 festgelegt und zum Öffnen der Seitenwandplane 5 von der Rückwand 17 bzw. einer Flügeltür 19 getrennt werden. Dann ist es nicht erforderlich, das Verbindungsmittel 26 der Seitenwandplane 5 in Form des Keders in das Verbindungsmittel 25 der Rückwand 17 einzuziehen bzw. aus dem Verbindungsmittel 25 der Rückwand 17 herauszuziehen, um die Seitenwandplane 5 am hinteren Ende des Aufbaus 1 zu Öffnen bzw. zu Schließen. Zwingend ist dies jedoch nicht, so dass das Verbindungsmittel 25 der Rückwand 17 bedarfsweis auch unlösbar mit der Rückwand 17 verbunden sein kann. Dies kann dazu dienen, eine Flügeltür 19 im mit der Seitenwandplane 5 verbundenen Zustand öffnen zu können, ohne dass es zu einem versehentlichen Trennen der Seitenwandplane 5 von der Rückwand 17 bzw. der Flügeltür 19 kommt. Dies kann aber auch dadurch erreicht werden, dass das Verbindungsmittel 25 der Rückwand 17 so lösbar, beispielweise formschlüssig, an der Flügeltür 19 gehalten ist, dass sich das Verbindungsmittel 25 der Rückwand 17 nicht versehentlich von Rückwand 17 bzw. der Flügeltür 19 löst, wenn sich die Seitenwandplane 5 durch das Öffnen der Seitenwandplane 5 am ihrem vorderen Ende oder durch das Öffnen der zugehörigen Flügeltür 19 entspannt. Gleichwohl kann das Verbindungsmittel 25 der Rückwand 17 in diesem Zustand vorzugsweise von der Flügeltür 19 getrennt werden, etwa durch Aushängen des Verbindungsmittels 25 gegenüber der Flügeltür 19.

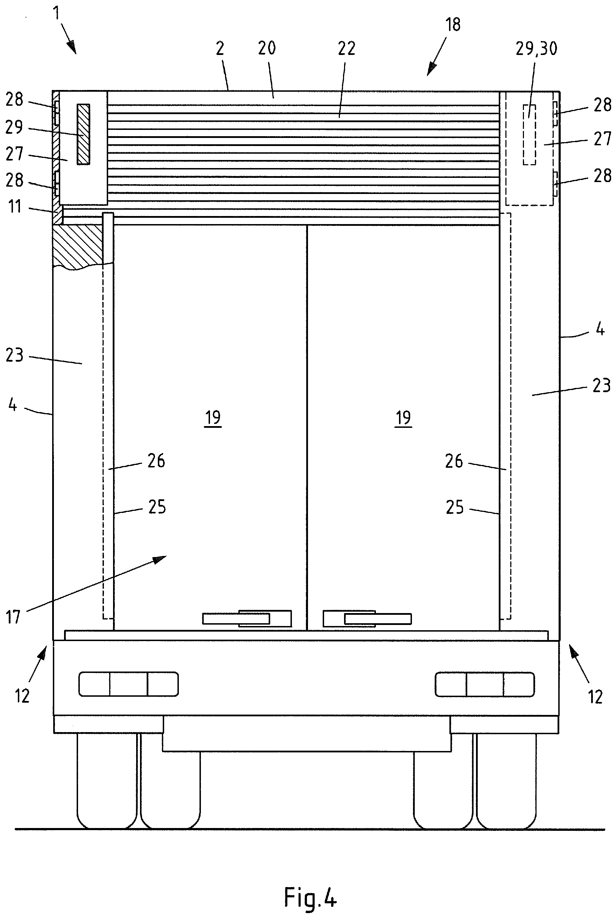

In der Fig. 4 ist der Planenaufbau 1 der Fig. 2 mit angehobenem hinteren Ende des Dachs 2 dargestellt. Dementsprechend ist mit dem Dach 2 auch die mit dem Dach 2 verbundene Rückwandschürze 22 angehoben, so dass sich die Rückwandschürze 22 in einem größeren Umfang oberhalb der Flügeltüren 19 erstreckt als in der in der Fig. 2 dargestellten, unteren Stellung des hinteren Endes des Dachs 2. Die Seitenwandplanen 5 sind über die gesamte Höhe der Eckrungen 11 um diese außen herumgeführt, und zwar von der Seitenwand 4 zur Rückwand 17 des Planenaufbaus 1. Die Rückwandschürze 22 weist den Flügeltüren 19 zugeordnet Türschwerter 27 auf, die etwa angrenzend zu den Eckrungen 11 vorgesehen sind. Die Türschwerter 27 bei dem dargestellten und insoweit bevorzugten Planenaufbau 1 sind nicht unmittelbar mit den zugeordneten Flügeltüren 19, aber mit der Rückwandschürze 22 verbunden und werden daher beim Anheben des Dachs 2 gegenüber den Flügeltüren 19 nach oben angehoben bzw. ausgezogen. Beim Absenken des Dachs 2 werden die Türschwerter 27 dann wie die Rückwandschürze 22 selbst wieder eingefahren bzw. eingeschoben. Durch die Verbindung der Türschwerter 27 über Scharniere 28 mit den Eckrungen 11 können die Türschwerter 27 zusammen mit den Flügeltüren 19 zwischen einer hinteren, den Laderaum 8 teilweise verschließenden, geschlossenen Stellung und einer seitlichen, offenen Stellung unter teilweiser Freigabe des Laderaums 8 zum Be- und/oder Entladen hin und her verstellt werden. Damit die hinteren Enden 24 der Seitenwandplanen 5 auch mit den Türschwertern 27 verbunden werden können, um den Planenaufbau 1 so besser abzudichten und mit den Flügeltüren 19 geöffnet werden zu können, weisen die Türschwerter 27 und die hinteren Enden 24 der Seitenwandplanen 5 zusätzliche und korrespondierende Verbindungsmittel 29 auf.

Beim dargestellten und insoweit bevorzugten Planeaufbau 1 weist das Türschwert 27 als Verbindungsmittel 29 einen Magneten und das hintere Ende 24 der Seitenwandplane 5 ein korrespondierendes Verbindungsmittel 30 in Form eines magnetischen Verschlusses, etwa im Form einer Metallplatte, auf. Mithin kann die Seitenwandplane 5 oberhalb der Flügeltüren 19 magnetisch mit dem zugeordneten Türschwert 27 verbunden werden. Dabei ist sowohl der Magnet als auch der korrespondierende Verschluss länglich ausgebildet, so dass das Türschwert 27 in unterschiedlichen Stellungen des Dachs 2 über wenigstens im Wesentlichen die gesamte frei zugängliche Länge des Türschwerts 27 dicht mit dem hinteren Ende 24 der Seitenwandplane 5 verbunden werden kann.

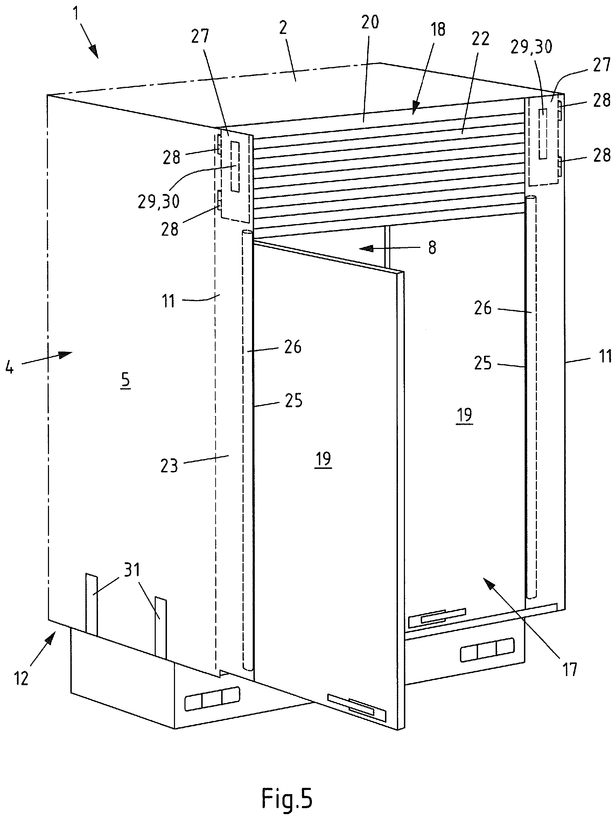

In der Fig. 5 ist die Rückwand 17 des Planenaufbaus 1 der Fig. 4 mit einer geöffneten Flügeltür 19 dargestellt. Die andere, geschlossen dargestellte Flügeltür 19 ist dabei gleichartig ausgebildet. Das hintere Ende 24 der Seitenwandplane 5 ist so mit der Flügeltür 19 und in der entsprechenden Stellung des Dachs 2 auch mit dem zugehörigen Türschwert 27 verbunden, so dass die Flügeltür 19 mit dem Türschwert 27 geöffnet, also von der geschlossenen Stellung in eine geöffnete Stellung zur Seite geschwenkt werden kann, ohne die Seitenwandplane 5 von der Rückwand 17 oder von den vorderen Eckrungen 10 zu lösen.

Dies ist problemlos möglich, weil das Öffnen der Flügeltür 19 aus der geschlossenen Stellung nicht mit einem Längen der Seitenwandplane 5 einhergeht. Vielmehr wird durch das Öffnen der Flügeltür 19 der Abstand des der Flügeltür 19 zugeordneten Verbindungsmittels 25 ebenso wie der Abstand des zusätzlichen Verbindungsmittels 29 des Türschwerts 27 jeweils von der vertikalen äußeren Kante der zugehörigen Eckrunge 11 verkürzt. So wird durch das Öffnen der Flügeltür 19 überschüssiges Planenmaterial der Seitenwandplane 5 gebildet und die Seitenwandplane 5 dementsprechend durch das Öffnen der Flügeltür 19 entspannt. Im Ergebnis müssen also die Seitenwandplanen 5 zum Be- und/oder Entladen des Laderaums 8 über die Flügeltüren 19 bzw. das Rückwandportal 18 nicht geöffnet bzw. von der Rückwand 17 gelöst werden. Zudem ist der dargestellte und insoweit bevorzugte Planenaufbau 1 so ausgebildet, dass die Seitenwandplanen 5 durch das erneute Schließen der Flügeltüren 19 und die damit einhergehende Hebelwirkung erneut gespannt werden. Ein nachträgliches Spannen der Seitenwand 5 vor der Fahrt des Planenaufbaus 1 kann dann unterbleiben, sofern nicht die vorderen Enden der Seitenwandplanen 5 von den zugehörigen vorderen Eckrungen 10 gelöst worden sind.

Bei dem dargestellten und insoweit bevorzugten Planenaufbau 1 können die Flügeltüren 19 unabhängig von der jeweiligen Höhe des hinteren Endes des Dachs 2 trotz stramm gezogener Seitenwandplanen 5 von der geschlossenen Stellung in die geöffnete Stellung verstellt werden. Zudem können die Flügeltüren 19 wieder unter Spannung der Seitenwandplanen 5 geschlossen werden, ohne dass die vorderen Enden der Seitenwandplanen 5 zwischenzeitlich von den vorderen Eckrungen 10 getrennt oder an den vorderen Eckrungen 10 entspannt oder an den vorderen Eckrungen 10 gespannt werden müssten.

Dies kann bedarfsweise auch erreicht werden, wenn das hintere Ende 24 der Seitenwandplane 5 ohne die Verwendung von Türschwertern 27 mit der Rückwandschürze 22 über entsprechende Verbindungsmittel verbunden wird, wobei ebenfalls Magnetverbindungen in Frage kommen. Die Verbindungsmittel sollten dann bevorzugt so ausgebildet sein, etwa durch eine geeignete Anpassung der Magnetkräfte, dass sich die Verbindung zwischen dem hinteren Ende 24 der Seitenwandplane 5 und der Rückwandschürze 22 während der Fahr nicht versehentlich löst, aber dennoch durch ein Öffnen der zugehörigen Flügeltür 19 zuverlässig getrennt werden kann. Die Verbindung zwischen der Rückwandschürze 22 und dem hintere Ende 24 der Seitenwandplane 5 behindert dann nicht das Öffnen der zugeordneten Flügeltür 19, während das hintere Ende 24 der Seitenwandplane 5 mit der Flügeltür 19 verbunden bleibt.

### Bezugszeichenliste

- 1: Planenaufbau
- 2: Dach
- 3: Dachplane
- 4: Seitenwand
- 5: Seitenwandplane
- 6: Schiebeverdeck
- 7: Längsholm
- 8: Laderaum
- 9: Ladeboden
- 10,11: Eckrunge
- 12: Boden
- 13: Mittelrunge
- 14: Stirnwand
- 15: Planenspannrohr
- 16: Ratscheneinrichtung
- 17: Rückwand
- 18: Rückwandportal
- 19: Flügeltür
- 20: Querholm
- 21: Scharnier
- 22: Rückwandschürze
- 23A: Rungengrundkörper
- 23B: Rungenschiebling
- 24: Ende
- 25: Verbindungsmittel
- 26: Verbindungsmittel
- 27: Türschwert
- 28: Scharnier
- 29,30: Verbindungsmittel
- 31: Spannmittel

## Patentansprüche

1. Planenaufbau (1) eines Nutzfahrzeugs (N), insbesondere Lastkraftwagens, Anhängers oder Sattelaufliegers, mit wenigstens einer Seitenwandplane (5) und einer Rückwand (17), wobei an der rückwärtigen Seite der Rückwand (17) wenigstens ein Verbindungsmittel (25) zum Festlegen der Seitenwandplane (5) vorgesehen ist und wobei das hintere Ende der Seitenwandplane (5) an der rückwärtigen Seite der Rückwand (17) an dem wenigstens einen Verbindungsmittel (25) der Rückwand (17) festgelegt ist,
**dadurch gekennzeichnet, dass**
die Rückwand (17) wenigstens eine zur Seite öffnende Flügeltür (19) aufweist und dass das wenigstens eine Verbindungsmittel (25) an der in der geschlossenen Stellung der Flügeltür (19) rückwärtigen Seite der Flügeltür (19) vorgesehen ist.

2. Planenaufbau nach Anspruch 1,
**dadurch gekennzeichnet, dass**
das wenigstens eine Verbindungsmittel (25) der Rückwand (17) zum formschlüssigen Festlegen der Seitenwandplane (5) vorgesehen ist und dass das hintere Ende der Seitenwandplane (5) formschlüssig an der rückwärtigen Seite der Rückwand (17) an dem wenigstens einen Verbindungsmittel (25) festgelegt ist.

3. Planenaufbau nach Anspruch 1 oder 2,
**dadurch gekennzeichnet, dass**
das wenigstens eine Verbindungsmittel (25) der Rückwand (17) ein Verbindungsprofil, vorzugsweise ein, insbesondere C-förmiges, Hakenprofil, ist und/oder dass das hintere Ende (24) der Seitenwandplanen (5) zur Verbindung mit dem wenigstens einen Verbindungsmittel (26) der Rückwand (17) eine Spannstange oder einen Keder aufweist.

4. Planenaufbau nach einem der Ansprüche 1 bis 3,
**dadurch gekennzeichnet, dass**
die wenigstens eine Seitenwandplane (5) über Schlitten derart an einem Längsholm (7) des Dachs (2) gehalten ist, so dass die Seitenwandplane (5) entlang des Längsholms (7) von einer die zugehörige Seitenwand (4) verschließenden, geschlossenen Stellung in eine die Seitenwand zum Be- und/oder Entladen freigebende, geöffnete Stellung verstellbar ist und dass, vorzugsweise, an einer Stirnwand (14) und/oder einer vorderen Eckrunge (10) eine Spanneinrichtung, insbesondere eine Ratscheneinrichtung (16), zum Spannen der Seitenwandplane (5) in der geschlossenen Stellung, insbesondere durch teilweises Aufwickeln der Seitenwandplane (5) um ein Planenspannrohr (15), vorgesehen ist.

5. Planenaufbau nach einem der Ansprüche 1 bis 4,
**dadurch gekennzeichnet, dass**
die wenigstens eine Flügeltür (19) über wenigstens ein Scharnier (21) an einer hinteren Eckrunge (11) angeschlagene ist

6. Planenaufbau nach Anspruch 5,
**dadurch gekennzeichnet, dass**
die wenigstens eine Flügeltür (19) im mit der Seitenwandplane (5) über das wenigstens eine Verbindungsmittel (25,26) verbundenen Zustand von der die Rückwand (17) wenigstens teilweise verschließenden, geschlossenen Stellung in die die Rückwand (17) zum Be- und/oder Entladen wenigstens teilweise freigebende, geöffnete Stellung und zurück verstellbar ist und dass, vorzugsweise, die Seitenwandplane (5) in der geschlossenen Stellung der Seitenwandplane (5) derart über das wenigstens eine Verbindungsmittel (25,26) der wenigstens einen Flügeltür (19) an der Flügeltür (19) festgelegt ist, so dass die Seitenwandplane (5) durch das Schließen der Flügeltür (19) gespannt und/oder durch das Öffnen der Flügeltür (19) entspannt, werden kann.

7. Planenaufbau nach einem der Ansprüche 1 bis 6,
**dadurch gekennzeichnet, dass**
ein wenigstens am hinteren Ende höhenverstellbares Dach (2) vorgesehen ist und dass, vorzugsweise, das rückwärtige Ende des Dachs (2) von hinteren, höhenverstellbaren Eckrungen (11) getragen und/oder mit einer sich entlang der Rückwand (17) nach unten erstreckenden, die Rückwand (17) in wenigstens einer oberen Stellung des Dachs (2) wenigstens teilweise verschließenden Rückwandschürze (22) verbunden ist.

8. Planenaufbau nach Anspruch 7,
**dadurch gekennzeichnet, dass**
an der rückwärtigen Seite der Rückwandschürze (22) wenigstens ein Verbindungsmittel (29) zum Festlegen der Seitenwandplane (5) vorgesehen ist und dass das hintere Ende (24) der wenigstens einen Seitenwandplane (5) mit wenigstens einem korrespondierenden Verbindungsmittel (30) an dem wenigstens einen Verbindungsmittel (29) der Rückwandschürze (22) festgelegt ist.

9. Planenaufbau nach Anspruch 8,
**dadurch gekennzeichnet, dass**
das wenigstens eine Verbindungsmittel (29) der Rückwandschürze (22) wenigstens einen Magneten umfasst und/oder dass die wenigstens eine Seitenwandplane (5) wenigstens einen Magneten zur Verbindung des hinteren Endes der Seitenwandplane (5) mit dem wenigstens einen Verbindungsmittel (29) der Rückwandschürze (22) umfasst.

10. Planenaufbau nach Anspruch 8 oder 9,
**dadurch gekennzeichnet, dass**
die Rückwandschürze (22) wenigstens ein gegenüber wenigstens einer Flügeltür (19) nach oben ausziehbares und/oder nach unten einschiebbares sowie zusammen mit der wenigstens einen Flügeltür (19) von einer den Laderaum (8) teilweise verschließende, geschlossenen Stellung in eine den Laderaum (8) teilweise freigebende, geöffnete Stellung und zurück verstellbares Türschwert (27) aufweist und dass, vorzugsweise, das wenigstens eine Verbindungsmittel (29) der Rückwandschürze (22) derart an dem wenigstens einen Türschwert (27) vorgesehen ist, so dass die wenigstens eine Flügeltür (19) mit der mit dem wenigstens einen Verbindungsmittel (29) des zugehörigen Türschwerts (27) verbundenen Seitenwandplane (5) von der die Rückwand (13) wenigstens teilweise verschließenden, geschlossenen Stellung in die die Rückwand (13) zum Be- und/oder Entladen wenigstens teilweise freigebende, geöffnete Stellung und zurück verstellbar ist.

11. Planenaufbau nach Anspruch 10,
**dadurch gekennzeichnet, dass**
das wenigstens eine Verbindungsmittel (29) des Türschwerts (27) derart mit dem hinteren Ende (24) der Seitenwandplane (5) verbunden ist, so dass die Seitenwandplane (5) durch das Schließen der Flügeltür (19) gespannt und/oder durch das Öffnen der Flügeltür (19) entspannt, werden kann.

12. Planenaufbau nach einem der Ansprüche 1 bis 11,
**dadurch gekennzeichnet, dass**
die höhenverstellbare Eckrunge (11), vorzugsweise inklusive eines mit dem Dach (2) oder einem Längsholm (7) verbundenen sowie gegenüber einem Rungengrundkörper (23A) wenigstens teilweise ausziehbaren Rungenschieblings (23B), von der Seitenwandplane (5) in der geschlossenen Stellung nach außen wenigstens im Wesentlichen vollständig umschlossen wird.

13. Planenaufbau nach einem der Ansprüche 1 bis 12,
**dadurch gekennzeichnet, dass**
das Dach (2) an seinem vorderen Ende und an seinem hinteren Ende höhenverstellbar vorgesehen ist und dass, vorzugsweise, die vorderen Ecken und die hinteren Ecken des Dachs (2) mit höhenverstellbaren Eckrungen (10,11) verbunden sind.

14. Planenaufbau nach Anspruch 13,
**dadurch gekennzeichnet, dass**
die höhenverstellbaren Eckrungen (10,11) einen mit dem Boden (12) des Planenaufbaus (1) fest verbundenen Rungengrundkörper (23A) und einen mit dem Dach (2) fest verbundenen Rungenschiebling (23B) aufweisen und dass, vorzugsweise, die Rungenschieblinge (23B) gegenüber dem Rungengrundkörper (23A) wenigstens teilweise ausziehbar und wieder einschiebbar am Rungengrundkörper (23A) gehalten sind.

15. Planenaufbau nach Anspruch 14,
**dadurch gekennzeichnet, dass**
die Rungenschieblinge (23B) in unterschiedlichen Höhen gegenüber den Rungengrundkörpern (23A) festlegbar sind und dass, vorzugsweise, zeitgleich einzelne Rungenschieblinge (23B), insbesondere die Rungenschieblinge (23B) der hinteren Eckrungen (11), in anderen Höhen gegenüber den zugehörigen Rungengrundkörpern (23A) festlegbar sind als andere Rungenschieblinge (23B), insbesondere die Rungenschieblinge (23B) der hinteren Eckrungen (11), gegenüber den zugehörigen Rungengrundkörpern (23A).

## Claims

1. Canvas cover (1) of a commercial vehicle (N), in particular a truck, trailer or semitrailer, having at least one side wall canvas (5) and a rear wall (17), wherein at least one connecting means (25) for fixing the side wall canvas (5) is provided on the rear-facing side of the rear wall (17) and wherein the back end of the side wall canvas (5) is fixed to the rear-facing side of the rear wall (17) on the at least one connecting means (25) of the rear wall (17),
**characterised in that**
the rear wall (17) has at least one swing door (19) opening to the side and **in that** the at least one connecting means (25) is provided on the rear-facing side of the swing door (19) in the closed position of the swing door (19).

2. Canvas cover according to claim 1,
**characterised in that**
the at least one connecting means (25) of the rear wall (17) is provided for fixing the side wall canvas (5) in a form-fitting manner and **in that** the back end of the side wall canvas (5) is fixed to the rear-facing side of the rear wall (17) on the at least one connecting means (25) in a form-fitting manner.

3. Canvas cover according to claim 1 or 2,
**characterised in that**
the at least one connecting means (25) of the rear wall (17) is a connecting profile, preferably an, in particular C-shaped, hook profile, and/or **in that** the back end (24) of the side wall canvas (5) has a tension rod or a weatherstrip for connection to the at least one connecting means (26) of the rear wall (17).

4. Canvas cover according to any one of claims 1 to 3,
**characterised in that**
the at least one side wall canvas (5) is held on a longitudinal strut (7) of the roof (2) by means of slides in such a way that the side wall canvas (5) can be adjusted along the longitudinal strut (7) from a closed position closing the associated side wall (4) into an open position exposing the side wall for loading and/or unloading and **in that**, preferably, a tensioning device, in particular a ratchet device (16), is provided on an end wall (14) and/or a front corner stanchion (10) for tensioning the side wall canvas (5) in the closed position, in particular by partially winding the side wall canvas (5) around a canvas tensioning tube (15).

5. Canvas cover according to any one of claims 1 to 4,
**characterised in that**
the at least one swing door (19) is fastened to a back corner stanchion (11) via at least one hinge (21).

6. Canvas cover according to claim 5,
**characterised in that**
the at least one swing door (19), in the state connected to the side wall canvas (5) via the at least one connecting means (25, 26) can be adjusted from the closed position at least partially closing the rear wall (17) into the open position at least partially exposing the rear wall (17) for loading and/or unloading and back again and **in that**, preferably, the side wall canvas (5) in the closed position of the side wall canvas (5) is fixed to the swing door (19) via the at least one connecting means (25, 26) of the at least one swing door (19) in such a way that the side wall canvas (5) can be tensioned by the closing of the swing door (19) and/or released by the opening of the swing door (19).

7. Canvas cover according to any one of claims 1 to 6,
**characterised in that**
a roof (2) is provided which can be adjusted in height at least at the back end and **in that**, preferably, the rear-facing end of the roof (2) is supported by back, height-adjustable corner stanchions (11) and/or is connected to a rear wall apron (22) which extends downwards along the rear wall (17) and at least partially closes the rear wall (17) in at least one upper position of the roof (2).

8. Canvas cover according to claim 7,
**characterised in that**
at least one connecting means (29) for fixing the side wall canvas (5) is provided on the rear-facing side of the rear wall apron (22) and **in that** the back end (24) of the at least one side wall canvas (5) is fixed to the at least one connecting means (29) of the rear wall apron (22) by at least one corresponding connecting means (30).

9. Canvas cover according to claim 8,
**characterised in that**
the at least one connecting means (29) of the rear wall apron (22) comprises at least one magnet and/or **in that** the at least one side wall canvas (5) comprises at least one magnet for connecting the back end of the side wall canvas (5) to the at least one connecting means (29) of the rear wall apron (22).

10. Canvas cover according to claim 8 or 9,
**characterised in that**
the rear wall apron (22) has at least one door blade (27) which can be pulled out upwards and/or pushed in downwards relative to at least one swing door (19) and can be adjusted together with the at least one swing door (19) from a closed position partially closing the load compartment (8) into an open position partially exposing the load compartment (8) and back again and **in that**, preferably, the at least one connecting means (29) of the rear wall apron (22) is provided on the at least one door blade (27) in such a way that the at least one swing door (19) with the side wall canvas (5) connected to the at least one connecting means (29) of the associated door blade (27) can be adjusted from the closed position at least partially closing the rear wall (13) into the open position at least partially exposing the rear wall (13) for loading and/or unloading and back again.

11. Canvas cover according to claim 10,
**characterised in that**
the at least one connecting means (29) of the door blade (27) is connected to the back end (24) of the side wall canvas (5) in such a way that the side wall canvas (5) can be tensioned by closing the swing door (19) and/or released by opening the swing door (19).

12. Canvas cover according to any one of claims 1 to 11,
**characterised in that**
the height-adjustable corner stanchion (11), preferably including a stanchion slide (23B) connected to the roof (2) or a longitudinal strut (7) and at least partially extendable relative to a stanchion base body (23A), is at least substantially completely enclosed outwardly by the side wall canvas (5) in the closed position.

13. Canvas cover according to any one of claims 1 to 12,
**characterised in that**
the roof (2) is provided height-adjustable at its front end and at its back end and **in that**, preferably, the front corners and the back corners of the roof (2) are connected to height-adjustable corner stanchions (10, 11).

14. Canvas cover according to claim 13,
**characterised in that**
the height-adjustable corner stanchions (10, 11) have a stanchion base body (23A) fixedly connected to the floor (12) of the canvas cover (1) and a stanchion slide (23B) fixedly connected to the roof (2), and **in that**, preferably, the stanchion slides (23B) are held on the stanchion base body (23A) so as to be at least partially extendable and retractable relative to the stanchion base body (23A).

15. Canvas cover according to claim 14,
**characterised in that**
the stanchion slides (23B) can be fixed at different heights relative to the stanchion base bodies (23A) and **in that**, preferably, individual stanchion slides (23B), in particular the stanchion slides (23B) of the back corner stanchions (11), can be fixed simultaneously at different heights relative to the associated stanchion base bodies (23A) than other stanchion slides (23B), in particular the stanchion slides (23B) of the back corner stanchions (11), relative to the associated stanchion base bodies (23A).

## Revendications

1. Structure à bâche (1) d'un véhicule utilitaire (N), notamment un camion, une remorque ou une semi-remorque, avec au moins une bâche pour paroi latérale (5) et une paroi arrière (17), au moins un moyen de raccordement (25) étant prévu sur le côté arrière de la paroi arrière (17) pour fixer la bâche pour paroi latérale (5), et l'extrémité arrière de la bâche pour paroi latérale (5), sur le côté arrière de la paroi arrière (17), étant fixée à au moins un moyen de raccordement (25) de la paroi arrière (17), **caractérisée en ce que** la paroi arrière (17) présente au moins une porte à deux battants ouverte sur le côté (19) et **en ce que** l'on prévoit au moins un moyen de raccordement (25) sur le côté arrière de la porte à deux battants (19) dans la position fermée de la porte à deux battants (19).

2. Structure à bâche selon la revendication 1,
**caractérisée en ce que** l'on prévoit au moins un moyen de raccordement (25) de la paroi arrière (17) pour fixer, par liaison de forme, la bâche pour paroi latérale (5) et **en ce que** l'extrémité arrière de la bâche pour paroi latérale (5) est fixée, par liaison de forme, sur le côté arrière de la paroi arrière (17), à au moins un moyen de raccordement (25).

3. Structure à bâche selon la revendication 1 ou 2,
**caractérisée en ce qu'**au moins un moyen de raccordement (25) de la paroi arrière (17) est un profil de raccordement, de préférence un profil en forme de crochet, notamment en forme de C, et/ou **en ce que** l'extrémité arrière (24) de la bâche pour paroi latérale (5) présente une tige d'accouplement ou un bourrelet pour le raccordement à au moins un moyen de raccordement (26) de la paroi arrière (17).

4. Structure à bâche selon l'une des revendications 1 à 3,
**caractérisée en ce qu'**au moins une bâche pour paroi latérale (5) est maintenue par des coulisseaux sur un longeron (7) de la toiture (2) de sorte que la bâche pour paroi latérale (5) est susceptible d'être déplacée le long du longeron (7) d'une position fermée, fermant la paroi latérale (4) correspondante, en une position ouverte, libérant la paroi latérale pour le chargement et/ou déchargement, et **en ce que** l'on prévoit, de préférence, sur une paroi avant (14) et/ou sur une ranche d'angle avant (10), un dispositif de serrage, notamment un dispositif à rochet (16), pour le serrage de la bâche pour paroi latérale (5) dans la position fermée, notamment par un enroulement partiel de la bâche pour paroi latérale (5) autour d'une barre de tension de bâche (15).

5. Structure à bâche selon l'une des revendications 1 à 4,
**caractérisée en ce qu'**au moins une porte à deux battants (19) est montée à l'aide d'au moins une charnière (21) sur une ranche d'angle arrière (11).

6. Structure à bâche selon la revendication 5,
**caractérisée en ce qu'**au moins une porte à deux battants (19) est susceptible d'être déplacée, dans l'état raccordé avec la bâche pour paroi latérale (5), par au moins un moyen de raccordement (25, 26), de la position fermée, fermant au moins partiellement la paroi arrière (17), en la position ouverte, libérant au moins partiellement la paroi arrière (17) pour le chargement et/ou déchargement, et inversement, et **en ce que**, de préférence, la bâche pour paroi latérale (5), dans la position fermée de la bâche pour paroi latérale (5), est fixée de telle sorte, par au moins un moyen de raccordement (25, 26) d'au moins une porte à deux battants (19), sur la porte à deux battants (19) que la bâche pour paroi latérale (5) peut être tendue par la fermeture de la porte à deux battants (19) et/ou détendue par l'ouverture de la porte à deux battants (19).

7. Structure à bâche selon l'une des revendications 1 à 6,
**caractérisée en ce que** l'on prévoit une toiture (2) réglable en hauteur au moins au niveau de l'extrémité arrière et **en ce que**, de préférence, l'extrémité arrière de la toiture (2) est portée par des ranches d'angle arrière (11) réglables en hauteur et/ou est reliée à un tablier de paroi arrière (22) s'étendant vers le bas le long de la paroi arrière (17), fermant au moins partiellement la paroi arrière (17) dans au moins une position supérieure de la toiture (2).

8. Structure à bâche selon la revendication 7,
**caractérisée en ce que** l'on prévoit, sur le côté arrière du tablier de paroi arrière (22), au moins un moyen de raccordement (29) pour fixer la bâche pour paroi latérale (5) et **en ce que** l'extrémité arrière (24) d'au moins une bâche pour paroi latérale (5) est fixée, avec au moins au moyen de raccordement correspondant (30), à au moins un moyen de raccordement (29) du tablier de paroi arrière (22).

9. Structure à bâche selon la revendication 8,
**caractérisée en ce qu'**au moins un moyen de raccordement (29) du tablier de paroi arrière (22) comporte au moins un aimant et/ou **en ce qu'**au moins une bâche pour paroi latérale (5) comporte au moins un aimant pour fixer l'extrémité arrière de la bâche pour paroi latérale (5) à au moins un moyen de raccordement (29) du tablier de paroi (22).

10. Structure à bâche selon la revendication 8 ou 9,
**caractérisée en ce que** le tablier de paroi arrière (22) présente au moins une entaille de porte (27) extensible vers le haut et/ou enfichable vers le bas par rapport à au moins une porte à deux battants (19) ainsi que déplaçable, ensemble avec au moins une porte à deux battants (19), d'une position fermée, fermant partiellement l'espace de chargement (8), en une position ouverte, libérant partiellement l'espace de chargement (8) et inversement, et **en ce que**, de préférence, l'on prévoit au moins un moyen de raccordement (29) du tablier de paroi arrière (22) sur au moins une entaille de porte (27) de telle sorte qu'au moins une porte à deux battants (19), avec la bâche pour paroi latérale (5) reliée au moins à un moyen de raccordement (29) de l'entaille de porte (27) correspondante, est susceptible d'être déplacée de la position fermée, fermant au moins partiellement la paroi arrière (13), en la position ouverte, libérant au moins partiellement la paroi arrière (13) pour le chargement et/ou déchargement et inversement.

11. Structure à bâche selon la revendication 10,
**caractérisée en ce qu'**au moins un moyen de raccordement (29) de l'entaille de porte (27) est reliée de telle sorte avec l'extrémité arrière (24) de la bâche pour paroi latérale (5) que la bâche pour paroi latérale (5) peut être tendue par la fermeture de la porte à deux battants (19) et/ou détendue par l'ouverture de la porte à deux battants (19).

12. Structure à bâche selon l'une des revendications 1 à 11,
**caractérisée en ce que** la ranche d'angle réglable en hauteur (11), de préférence comprenant une glissière à ranche (23B), reliée au toit (2) ou à un longeron (7), et pouvant être extraite au moins partiellement par rapport à un corps de base de ranche (23A), est entourée vers l'extérieur, au moins essentiellement intégralement, par la bâche pour paroi latérale (5) dans la position fermée.

13. Structure à bâche selon l'une des revendications 1 à 12,
**caractérisée en ce que** l'on prévoit la toiture (2) réglable en hauteur au niveau de son extrémité avant et au niveau de son extrémité arrière, et **en ce que**, de préférence, les angles avant et les angles arrière de la toiture (2) sont reliés aux ranches d'angle réglables en hauteur (10, 11).

14. Structure à bâche selon la revendication 13,
**caractérisée en ce que** les ranches d'angle réglables en hauteur (10, 11) présentent un corps de base de ranche (23A) solidement relié au sol (12) de la structure à bâche (1) et une glissière à ranche (23B) solidement reliée au toit (2) et **en ce que**, de préférence, les glissières à ranche (23B) sont maintenues par rapport au corps de base de ranche (23A) au moins partiellement extensibles et à nouveau enfichables sur le corps de base de ranche (23A).

15. Structure à bâche selon la revendication 14,
**caractérisée en ce que** les glissières à ranche (23B) sont susceptibles d'être fixées à des hauteurs différentes par rapport aux corps de base de ranche (23A) et **en ce que**, de préférence, simultanément des glissières à ranche (23B) individuelles, notamment les glissières à ranche (23B) de la ranche d'angle arrière (11), sont susceptibles d'être fixées à d'autres hauteurs par rapport au corps de base de ranche (23A) correspondant que d'autres glissières à ranche (23B), notamment les glissières à ranche (23B) de la ranche d'angle arrière (11), par rapport au corps de base de ranche (23A) correspondant.
